# EUROPÄISCHE PATENTSCHRIFT

(11) **EP 1 893 068 B1**
(45) Veröffentlichungstag und Bekanntmachung des Hinweises auf die Patenterteilung: **25.05.2011**
(21) Anmeldenummer: 06754581.4
(22) Anmeldetag: 22.06.2006
(51) Int. Cl.: A47J 41/00, A47G 19/12

(54) **WÄRMEISOLIERENDES BEHÄLTNIS**
HEAT-INSULATING CONTAINER
CONTENANT THERMOISOLANT

(30) Priorität: 23.06.2005 DE 102005030310
(43) Veröffentlichungstag der Anmeldung: 05.03.2008
(73) Patentinhaber: Fraunhofer-Gesellschaft zur Förderung der angewandten Forschung e.V., 80686 München (DE)
(72) Erfinder: SEDLBAUER, Klaus, 83607 Holzkirchen (DE); SINNESBICHLER, Herbert, 83101 Thansau (DE)
(74) Vertreter: Pfenning, Meinig & Partner GbR
(86) Internationale Anmeldenummer: PCT/EP2006/006187
(87) Internationale Veröffentlichungsnummer: WO 2006/136459

(56) Entgegenhaltungen:
- DE-A1- 19 819 008
- DE-A1-102004 017 948
- US-A- 5 884 006

## Beschreibung

Die Erfindung betrifft ein wärmeisolierendes Behältnis nach dem Oberbegriff des Hauptanspruchs.

Wärmeisolierende Behältnisse sind an sich bekannt, beispielsweise aus der Druckschrift EP 1 452 459 A1.

Aus der DE 199 32 872 A1 ist eine Speisebox für die Speiseverteilung bekannt, die einen aus einem Bodenteil und einem Deckelteil bestehenden Außenbehälter und eine in den Außenbehälter einsetzbare Essschale mit einer Speisemulde zur Aufnahme einer Speise aufweist. Die Essschale ist mit einer Speicherkammer versehen, in der Speichermaterial so angeordnet ist, dass in unmittelbaren thermischen Kontakt mit der Speisemulde der Essschale steht. Das Speichermaterial umfasst mehrere Latentspeicherkomponenten mit unterschiedlichen Umwandlungstemperaturen. Damit wird erreicht, dass ein Teil der freigegebenen Latentwärme bei einer Temperatur oberhalb eines definierten Garpunktes von 85°C zum Nachgaren der Speise verwendet werden kann, während ein anderer Teil freigesetzten Latentwärme bei einer Temperatur unterhalb des Garpunktes zum Warmhalten genutzt wird.

Über den Aufbau dieser Essschale wird nichts weiter ausgeführt, offensichtlich muss die Essschale in dem Bodenteil verbleiben, da ansonsten keine Stabilität gewährleistet ist.

Ein gattungsgemäßes, allerdings nur mit verhältnismäßig hohem Gewicht realisierbares Behältnis ist auch in der Druckschrift DE 198 19 008 A1 gezeigt.

Ein dem Oberbegriff des Hauptanspruchs entsprechendes Behältnis ist in der Druckschrift DE 10 2004 017 948 A1 gezeigt.

Der Erfindung liegt die Aufgabe zugrunde ein wärmeisolierendes Behältnis, das als Geschirr verwendbar ist, für die Aufnahme von Lebensmitteln oder Getränken zu schaffen, das eine gute Wärmeisolierung bei Anpassung der Temperaturbedingungen aufweist, wobei es eine gute Stabilität bei einem Gewicht von handelsüblichem Keramikgeschirr gewährleisten soll.

Diese Aufgabe wird erfindungsgemäß durch die kennzeichnenden Merkmale des Hauptanspruchs in Verbindung mit den Merkmalen des Oberbegriffs gelöst.

Dadurch, dass zwischen einer inneren und einer äußeren Umhüllung die eine Umwandung des Behältnisses bilden, eine Leichtbau-Tragkonstruktion angeordnet ist, die mit Latentwärmespeichermaterial ausgefüllt ist, wird ein Behältnis mit guter Wärmeisolierung zur Verfügung gestellt, dass eine besondere Festigkeit aufweist, wobei die Wanddicke des Behältnisses durch die aussteifende Tragkonstruktion sehr gering gehalten werden kann und der Anteil von Wärmespeichermaterial am Gesamtvolumen maximiert werden kann. Damit ist das Behältnis nicht schwerer als herkömmliches Geschirr.

Durch die in den Unteransprüchen angegebenen Maßnahmen sind vorteilhafte Weiterbildungen und Verbesserungen möglich.

Zur besseren Wärmeübertragung in das Latentwärmespeichermaterial sind die Wandungen der als Gitter- oder Wabenstruktur ausgebildeten Leichtbau-Tragkonstruktion aus thermisch gut leitendem Material hergestellt. Die Gitter-, Maschen-, Waben- oder sonstige Kammerstruktur bildet Hohlräume oder Kammern, die mit Latentwärmespeichermaterial ausgefüllt sind. Dabei kann die Tragstruktur aus Pappe, Kunststoff oder Metall hergestellt sein, wobei die Wandungen der Tragkonstruktion selbst als Gitter ausgebildet sein können.

In vorteilhafter Weise ist zur Vermeidung erhöhter Wärmeübertragung an die Außenseite des Geschirrs die Gitter- bzw. Wabenstruktur teilweise mit einer dämmenden Kunststoffschicht versehen. Als Option kann auf die äußere Umhüllung zusätzlich eine Dämmschicht aufgebracht werden.

In vorteilhafter Weise werden der Umschlagpunkt bzw. die Umschlagpunkte so gewählt, dass er bzw. sie an den bestimmungsgemäßen Gebrauch der Lebensmittel oder Getränke angepasst sind.

Das Verhältnis der Masse des Wärmespeichermaterials zur Masse der Umhüllung und der Leichtbau-Tragkonstruktion soll möglichst sein, beispielsweise größer als 6, besser größer als 8, vorzugsweise größer als 10.

Ein Ausführungsbeispiel der Erfindung ist in der Zeichnung dargestellt und wird in der nachfolgenden Beschreibung näher erläutert. Es zeigen:
- Fig. 1: einen Schnitt durch das erfindungsgemäße Be- hältnis,
- Fig. 2: eine genauere Darstellung des Aufbaus des erfindungsgemäßen Behältnisses, und
- Fig. 3: eine Darstellung der Leichtbau- Tragkonstruktion, die bei dem erfindungsge- mäßen Behältnis verwendet wird.

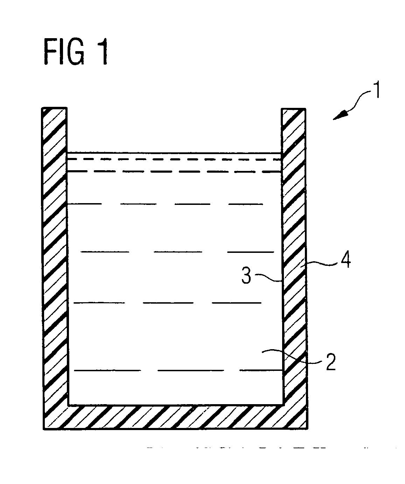

In Fig. 1 ist das erfindungsgemäße Behältnis in Form eines wärmeisolierenden Bechers 1 dargestellt, der beispielsweise eine Flüssigkeit 2 aufnimmt. Eine Umwandung 3 aus Kunststoff, Papier, Metall oder Verbundmaterial umschließt Latentspeichermaterial, z.B. Parafine, das einen Umschlagpunkt aufweist, der je nach Verwendungszweck an die jeweilige Trink- bzw. Esstemperatur angepasst ist. Wird beispielsweise in einen solchen Becher 1 mit einem Latentspeichermaterial, dessen Umschlagpunkt bei ca. 45°C liegt, heißer Kaffee eingeschenkt, tritt ein Phasenwechsel von fest nach flüssig auf, wobei Wärme in den Speichermaterialien gespeichert wird. Hierdurch erniedrigt sich die Temperatur des Kaffees auf Trinkniveau, z.B. 45°C und anschließend wird der Kaffee aufgrund der Wärmereserven in dem Speichermaterial länger auf der Temperatur des Umschlagpunktes, wobei das Latentspeichermaterial unter Wärmeabgabe an den Kaffee langsam erstarrt. Eine schnelle Abkühlung wird so wirkungsvoll reduziert. Bei heißen Suppen kann der Umschlagpunkt beispielsweise bei 70° liegen. Der Effekt kann auch für kalte Getränke oder Lebensmittel angewandt werden, wobei der Umschlagpunkt des Wärmespeichermaterials entsprechend niedriger, z.B. 10°C, zu wählen ist.

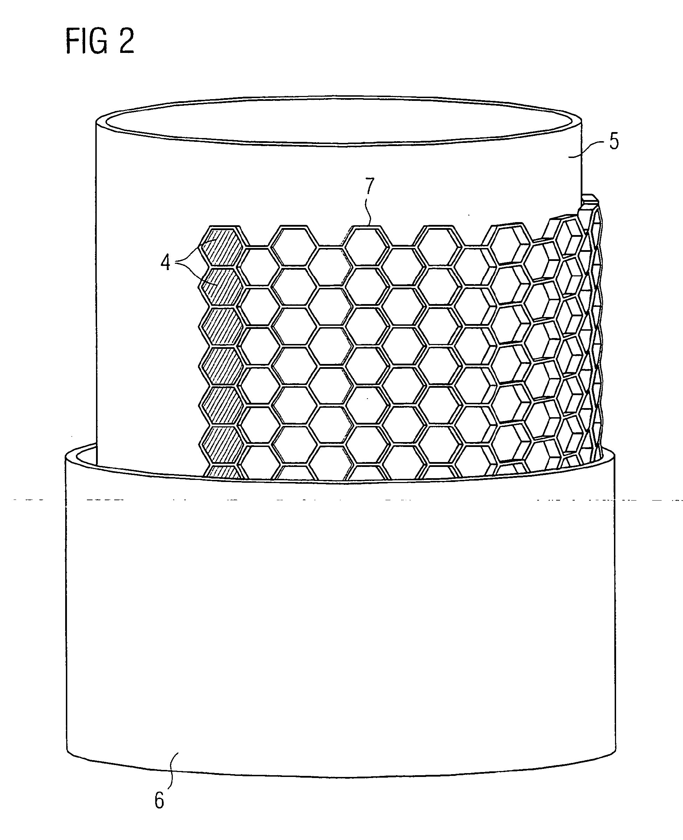

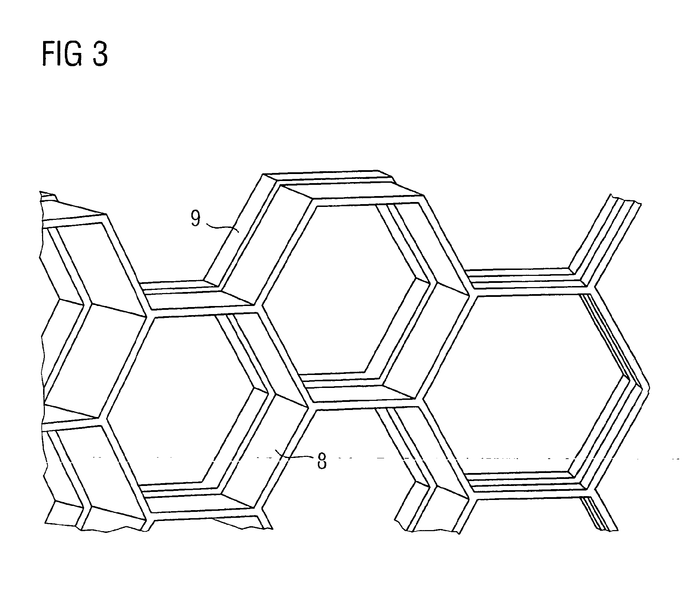

In den Fign. 2 und 3 ist der innere Aufbau des Bechers 1 genauer dargestellt. Der Becher 1 weist eine innere Umhüllung 5 und eine äußere Umhüllung 6 auf, zwischen denen eine Leichtbau-Tragkonstruktion 7 angeordnet ist, wobei letztere im Ausführungsbeispiel Wabenstruktur mit dünnen Trennwänden 8 ausgebildet ist. Die freien Hohlräume zwischen den dünnen Wänden 8 sind mit Latentwärmespeichermaterial 4 vollständig ausgefüllt, so dass der Becher 1 im Wesentlichen aus diesem Speichermaterial 4 besteht. Die Waben, d.h. die Wände der Wabenstruktur bestehen z.B. aus Kunststoff, Metall, Papier oder ähnlichem und sind sowohl im Bereich des Bodens als auch der Umfangswand des Behälters 1 integriert und vollständig vom Speichermaterial 4 umschlossen. Die besondere Festigkeit wird durch die hexagonale Wabenstruktur 7 erreicht.

Die dünnen Wände 8 der Leichtbau-Tragkonstruktion, die selbst auch als Gitter ausgebildet sein können, sind aus thermisch gut leitendem Material hergestellt, wobei der zur Außenseite des Behälters hin gerichtete Bereich der Wände zusätzlich mit einer Umhüllung aus wärmedämmendem Material 9, beispielsweise einer Beschichtung zur Vermeidung erhöhter Wärmeübertragung an die Außenseiten, versehen sind.

Die innere und äußere Umhüllung 5, 6 stellen beispielsweise eine dünne Beschichtung dar, die das Wärmespeichermaterial 4 an der Oberfläche schützt. Wenn gewünscht, kann auf der äußeren Umhüllung 6 zusätzlich eine Dämmschicht aufgebracht werden.

Als Beispiel wird im Folgenden eine Kaffeetasse vorgegebenen, die mit einem Durchmesser von 8 cm und einer Höhe von 9 cm ein nutzbares Volumen von etwa 0,25 Liter besitzt. Wird hierin z.B. Kaffee mit einer angenommenen Temperatur von 100°C eingeschenkt, der sich durch im Speichermaterial speicherbare Latentwärme auf Trinkniveau von ca. 45°C abkühlen soll, muss hierzu die Energiemenge von 48 kJ durch den Phasenübergang in der Umhüllung gespeichert werden. Ein mögliches zu verwendendes Speichermaterial ist das organische Parafin C17 - C28 mit einem Schmelzpunkt von 42 - 44°C bzw. das organische Parafin C20 - C33 mit einem Schmelzpunkt 48 - 50°C mit je einer spezifischen Schmelzenthalpie von 189 kJ/kg. Zur Speicherung der nötigen Energiemenge von 58 kJ sind pro Tasse 0,31 kg Speichermaterial nötig. Eine handelsübliche Keramiktasse mit den angegebenen Abmessungen weist eine Masse von ca. 0,35 kg auf. Damit die erfindungsgemäße Kaffeetasse mit Speichermaterial nicht schwerer ist als herkömmliches Geschirr, darf die Tragkonstruktion zur Stabilisierung des geschmolzenen Speichermaterials die Gesamtmasse nur unwesentlich erhöhen. Dies wird z.B. durch die Verwendung der dünnen, hexagonalen Wabenstruktur 8 erreicht.

Allgemeiner ausgedrückt wird die der vorliegenden Erfindung zugrunde liegende Aufgabe, ein möglichst leichtes Behältnis zu schaffen, mit dem Lebensmittel oder Getränke möglichst lange auf einer gewünschten Temperatur gehalten werden können, gelöst durch ein wärmeisolierendes Behältnis mit einer Umwandung, die einen Raum für die Aufnahme von Lebensmitteln oder Getränken umschließt, bei dem innerhalb der Umwandung Latentwärmespeichermaterial aufgenommen ist, wobei zwischen einer inneren Umhüllung und einer äußeren Umhüllung, die die Umwandung bilden, eine die innere Umhüllung mit der äußeren Umhüllung verbindende Leichtbau-Tragkonstruktion angeordnet ist, die mit dem Latentwärmespeichermaterial ausgefüllt ist. Die genannte Leichtbau-Tragkonstruktion umfasst dabei Streben und/oder Wände, die die äußere Umhüllung mit der inneren Umhüllung verbinden.

Solche Wände können als durchgehende Wände ausgeführt sein, so dass durch die Leichtbau-Tragkonstruktion gebildete Kammern oder Hohlräume zwischen den Umhüllungen vollständig voneinander getrennt sind, wodurch eine besonders gute Stützung des Behältnisses erreicht wird. Die Wände können aber auch durchbrochen ausgeführt sein, so dass durch die Leichtbau-Tragkonstruktion gebildete Kammern oder Hohlräume nicht vollständig voneinander getrennt sind. Dadurch lässt sich das Gewicht des Behältnisses noch weiter reduzieren. Bevorzugt ist eine Ausführung der Erfindung, bei der durch eine Vielzahl von zwischen der inneren Umhüllung und der äußeren Umhüllung angeordneten, die innere Umhüllung mit der äußeren Umhüllung verbindenden Wänden eine Vielzahl von Kammern gebildet wird, die wie gesagt vollständig voneinander getrennt oder auch aufgrund von Durchbrechungen der genannten Wände miteinander verbunden sein können.

In geschilderter Weise kann problemlos erreicht werden, dass das Verhältnis der Masse des Latentwärmespeichermaterials zu einer durch die Leichtbau-Tragkonstruktion mit der inneren Umhüllung und der äußeren Umhüllung gebildeten Masse größer als 2 oder vorteilhafterweise größer als 4 ist. Besonders bevorzugt sind Ausführungen, bei denen dieses Verhältnis größer als 6, besser noch größer als 8 oder größer als 10 ist.

## Patentansprüche

1. Wärmeisolierendes Behältnis mit einer Umwandung, die einen Raum für die Aufnahme von Lebensmitteln oder Getränken umschließt, wobei innerhalb der Umwandung Latentwärmespeichermaterial aufgenommen ist und wobei,
zwischen einer inneren und einer äußeren Umhüllung (5, 6), die die Umwandung bilden, eine die innere Umhüllung (5) mit der äußeren Umhüllung (6) verbindende Leichtbau-Tragkonstruktion (7) angeordnet ist, die mit dem Latentwärmespeichermaterial (4) ausgefüllt ist,
**dadurch gekennzeichnet, dass** die Leichtbau-Tragkonstruktion (7) Streben und/oder Wände umfasst, die die äußere Umhüllung (6) mit der inneren Umhüllung (5) verbinden.

2. Behältnis nach Anspruch 1, **dadurch gekennzeichnet, dass** die Leichtbau-Tagkonstruktion (7) als Gitter- oder Wabenstruktur ausgebildet ist, deren Hohlräume mit dem Latentwärmespeichermaterial gefüllt sind.

3. Behältnis nach Anspruch 1 oder Anspruch 2, **dadurch gekennzeichnet, dass** das Verhältnis der Masse des Wärmespeichermaterials zur Masse der Umhüllung und der Leichtbau-Tragkonstruktion größer als 6, bevorzugt größer als 8, vorzugsweise größer als 10 ist.

4. Behältnis nach Anspruch 3, **dadurch gekennzeichnet, dass** die Umhüllung aus Kunststoff, Metall und/oder Verbundmaterial besteht.

5. Behältnis nach einem der Ansprüche 1 bis 4, **dadurch gekennzeichnet, dass** die Außenseite des Behältnisses eine zusätzliche Dämmschicht zur weiteren Isolierung aufweist.

6. Behältnis nach einem der Ansprüche 1 bis 5, **dadurch gekennzeichnet, dass** das Latentwärmespeichermaterial ein Paraffingemisch ist.

7. Behältnis nach einem der Ansprüche 1 bis 6, **dadurch gekennzeichnet, dass** abhängig vom bestimmungsgemäßen Gebrauch die Latentwärmespeicherelemente einen Umschlagpunkt zwischen 0° und 70° aufweisen.

8. Behältnis nach einem der Ansprüche 1 bis 7, **dadurch gekennzeichnet, dass** die mit dem Latentwärmespeichermaterial aufgefüllte Leichtbau-Tragkonstruktion mit Beschichtungen versehen ist, die die Umhüllung bilden.

9. Behältnis nach einem der Ansprüche 1 bis 8, **dadurch gekennzeichnet, dass** die Leichtbau-Tragkonstruktion (7) aus einem thermisch gut leitenden Material hergestellt ist und zur äußeren Umhüllung hin mit einer wärmedämmenden Schicht versehen ist.

10. Behältnis nach einem der Ansprüche 1 bis 9, **dadurch gekennzeichnet, dass** das Latentwärmespeichermaterial aus mikroverkapselten Speicherelementen besteht.

11. Behältnis nach einem der Ansprüche 1 bis 10, **dadurch gekennzeichnet, dass** die Gitter- oder Wabenstruktur aus Pappe, Metall und/oder Kunststoff hergestellt ist.

## Claims

1. A heat-insulating container with a surrounding wall, which encloses a space for holding foodstuffs or beverages, whereby latent heat storage material is accommodated within said surrounding wall, and whereby between an inner casing and an outer casing (5, 6), which form said surrounding wall, a light-weight supporting structure (7) is placed, connecting said inner casing (5) with said outer casing (6) and being filled with said latent heat storage material (4), **characterized in that** said light-weight supporting structure (7) comprises braces and/or walls, which connect the outer casing (6) with the inner casing (5).

2. A container according to claim 1, **characterized in that** said lightweight supporting structure (7) is formed as a grid pattern or honeycomb pattern, the cavities of which are filled with said latent heat storage material.

3. A container according to claim 1 or claim 2, **characterized in that** the ratio of the mass of said latent heat storage material to the mass of said casing and of said lightweight supporting structure is greater than 6, preferred greater than 8, preferably greater than 10.

4. A container according to claim 3, **characterized in that** said casing consists of plastic material, metal and/or composite material.

5. A container according to any one of claims 1 to 4, **characterized in that** the outside of said container comprises an insulating layer in addition to the further insulation.

6. A container according to any one of claims 1 to 5, **characterized in that** said latent heat storage material is a paraffin wax mixture.

7. A container according to any one of claims 1 to 6, **characterized in that** said latent heat storage elements have a transition point of between 0° and 70° depending on the intended purpose.

8. A container according to any one of claims 1 to 7, **characterized in that** said lightweight supporting structure filled with said latent heat storage material is provided with coatings forming said casing.

9. A container according to any one of claims 1 to 8, **characterized in that** said lightweight supporting structure (7) is made of a thermally highly conductive material, and is provided with a heat insulating layer towards said outer casing.

10. A container according to any one of claims 1 to 9, **characterized in that** said latent heat storage material consists of microencapsulated storage elements.

11. A container according to any one of claims 1 to 10, **characterized in that** said grid or honeycomb pattern is made of cardboard, metal and/or plastic material.

## Revendications

1. Contenant thermoisolant avec une structure de paroi qui renferme un espace destiné à la réception d'aliments ou de boissons, dans lequel est logé, à l'intérieur de la structure de paroi, un matériau de stockage de chaleur latente et dans lequel est positionnée, entre une enveloppe interne et une enveloppe externe (5, 6) formant la structure de paroi, une structure support de construction légère (7) reliant l'enveloppe interne (5) à l'enveloppe externe (6) et étant remplie du matériau de stockage de chaleur latente (4),
**caractérisé en ce que** la structure support de construction légère (7) comporte des étais et/ou des parois qui relient l'enveloppe externe (6) à l'enveloppe interne (5).

2. Contenant selon la revendication 1, **caractérisé en ce que** la structure support de construction légère (7) se présente sous la forme d'une structure de grillage ou d'une structure gaufrée, dont les espaces creux sont remplis du matériau de stockage de chaleur latente.

3. Contenant selon la revendication 1 ou 2, **caractérisé en ce que** le rapport de la masse du matériau de stockage de chaleur latente à la masse de l'enveloppe et de la structure support de construction légère est supérieur à 6, de préférence supérieur à 8, de préférence supérieur à 10.

4. Contenant selon la revendication 3, **caractérisé en ce que** la structure de paroi est constituée d'un matériau synthétique, d'un métal et/ou d'un matériau composite.

5. Contenant selon l'une quelconque des revendications 1 à 4, **caractérisé en ce que** la face externe du contenant présente une couche isolante supplémentaire pour une isolation supplémentaire.

6. Contenant selon l'une quelconque des revendications 1 à 5, **caractérisé en ce que** le matériau de stockage de chaleur latente est un mélange de paraffine.

7. Contenant selon l'une quelconque des revendications 1 à 6, **caractérisé en ce qu'**en fonction de l'utilisation conforme aux prescriptions, les éléments de stockage de chaleur latente présentent un point de transition compris entre 0 ° et 70°.

8. Contenant selon l'une quelconque des revendications 1 à 7, **caractérisé en ce que** la structure support de construction légère, remplie du matériau de stockage de chaleur latente, est pourvue de revêtements qui forment l'enveloppe.

9. Contenant selon l'une quelconque des revendications 1 à 8, **caractérisé en ce que** la structure support de construction légère (7) est fabriquée à partir d'un matériau ayant de bonnes qualités thermo-conductrices et est dotée, en direction de l'enveloppe externe, d'une couche calorifuge.

10. Contenant selon l'une quelconque des revendications 1 à 9, **caractérisé en ce que** le matériau de stockage de chaleur latente est constitué d'éléments de stockage micro-encapsulés.

11. Contenant selon l'une quelconque des revendications 1 à 10, **caractérisé en ce que** la structure de grillage ou la structure gaufrée est fabriquée à partir de carton, de métal et/ou d'un matériau synthétique.
